# EUROPÄISCHE PATENTANMELDUNG

(11) **EP 2 662 406 A1**
(43) Veröffentlichungstag der Anmeldung: **13.11.2013**
(21) Anmeldenummer: 12167353.7
(22) Anmeldetag: 09.05.2012
(51) Int. Cl.: C08L 15/00, C08C 19/44, C08F 36/04, B60C 1/00

(54) **Aminhaltige, carbinolterminierte Polymere**

(71) Anmelder: LANXESS Deutschland GmbH, 50569 Köln (DE)
(72) Erfinder: Steinhauser, Norbert, 40789 Monheim (DE); Gross, Thomas, 42489 Wülfrath (DE); Albino, Fernanda, 50672 Köln (DE)

(57) **Zusammenfassung**

Die vorliegende Erfindung betrifft Dienpolymere, wobei die Dienpolymere an den Polymerkettenanfängen tertiäre Aminogruppen der Formel (I) oder (II) 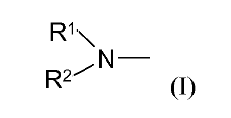 oder 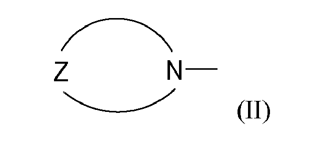 aufweisen, wobei
R¹, R²
gleich oder verschieden sind und Alkyl-, Cycloalkyl-, Aryl-, Alkaryl- und Aralkylreste darstellen, die Heteroatome wie O, N, S und/oder Si enthalten können,
Z
für einen divalenten organischen Rest steht, der neben C und H Heteroatome wie O, N, S und/oder Si enthalten kann,

sowie an den Polymerkettenenden silanhaltige Carbinolgruppen der Formel (III) 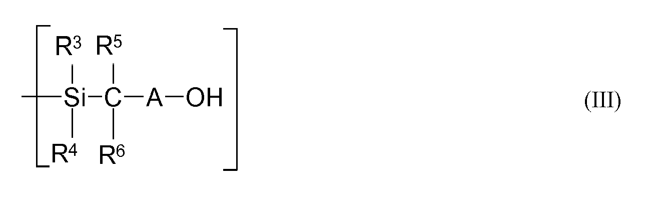 oder deren Metallsalze oder deren Halbmetallsalze aufweisen, wobei
R³, R⁴, R⁵, R⁶
gleich oder verschieden sind und ein H, Alkyl-, Cycloalkyl-, Aryl-, Alkaryl-und Aralkylreste darstellen, die Heteroatome wie O, N, S und/oder Si enthalten können,

A für einen divalenten organischen Rest steht, der neben C und H Heteroatome wie O, N, S und/oder Si enthalten kann.

## Beschreibung

Die Erfindung betrifft Dienpolymere mit Funktionalisierungen an den Polymerkettenanfängen und an den Polymerkettenenden, deren Herstellung und Verwendung.

Bei Reifenlaufflächen werden als wichtige Eigenschaften eine gute Haftung auf trockener und nasser Oberfläche sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Lebensdauer des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen u. a. in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. Wesentliche Beiträge zur Energiedissipation und somit zum Rollwiderstand in Reifenlaufflächen resultieren aus freien Polymerkettenenden und aus dem reversiblen Auf- und Abbau des Füllstoffnetzwerks, welches der in der Reifenlaufflächenmischung eingesetzte Füllstoff (zumeist Kieselsäure und/oder Ruß) ausbildet.

Die Einführung funktioneller Gruppen an den Polymerkettenanfängen und/oder Polymerkettenenden ermöglicht eine physikalische oder chemische Anbindung der Kettenanfänge und/oder Ketttenenden an die Füllstoffoberfläche. Dadurch wird deren Beweglichkeit eingeschränkt und somit die Energiedissipation bei dynamischer Beanspruchung der Reifenlauffläche verringert. Gleichzeitig können diese funktionellen Gruppen die Dispergierung des Füllstoffes in der Reifenlauffläche verbessern, was zu einer Schwächung des Füllstoffnetzwerkes und damit zu einer weiteren Absenkung des Rollwiderstandes führen kann.

Methoden zur Einführung von funktionellen Gruppen an den Polymerkettenanfängen mittels funktioneller anionischer Polymerisationsinitiatoren sind zum Beispiel in EP 0 513 217 B1 und EP 0 675 140 B1 (Initiatoren mit geschützter Hydroxylgruppe), US 2008/0308204 A1 (Thioether enthaltende Initiatoren) sowie in US 5,792,820 und EP 0 590 490 B1 (Alkaliamide von sekundären Aminen als Polymerisationsinitiatoren) beschrieben.

Insbesondere beschreibt die EP 0 594 107 B1 die *in situ* Verwendung von sekundären Aminen als funktionelle Polymerisationsinitiatoren, wobei die Kettenendenfunktionalisierung der Polymeren nicht beschrieben ist.

Weiterhin wurden zahlreiche Methoden zur Einführung von funktionellen Gruppen an den Polymerkettenenden entwickelt. Beispielsweise wird in der EP 0 180 141 A1 die Verwendung von 4,4'-Bis(dimethylamino)benzophenon oder N-Methylcaprolactam als Funktionalisierungsreagenzien beschrieben. Die Verwendung von Ethylenoxid und N-Vinylpyrrolidon ist aus EP 0 864 606 A1 bekannt. Eine Reihe weiterer möglicher Funktionalisierungsreagenzien sind in US 4,417,029 aufgeführt.

Insbesondere Silane mit in der Summe mindestens zwei Halogen- und/oder Alkyloxy- und/oder Aryloxysubstituenten an Silicium eignen sich gut zur Funktionalisierung an den Polymerkettenenden von Dienkautschuken, da einer der genannten Substituenten am Si-Atom leicht durch ein anionisches Dienpolymerkettenende ausgetauscht werden kann und der bzw. die weiteren der zuvor genannten Substituenten an Si als funktionelle Gruppe zur Verfügung steht, welche, gegebenenfalls nach Hydrolyse, mit dem Füllstoff der Reifenlaufflächenmischung wechselwirken kann. Beispiele für derartige Silane finden sich in US 3,244,664, US 4,185,042, EP 0 890 580 A1.

Viele der genannten Reagenzien zur Funktionalisierung an den Polymerkettenenden weisen jedoch Nachteile auf, wie z.B. schlechte Löslichkeit im Prozesslösungsmittel, hohe Toxizität oder hohe Flüchtigkeit, was zur Kontamination des rückgeführten Lösungsmittels führen kann. Darüber hinaus können viele dieser Funktionalisierungsreagenzien mit mehr als einem anionischen Polymerkettenende reagieren, was zu oft störenden und schwer zu kontrollierenden Kopplungsreaktionen führt. Dies gilt v. a. für die genannten Silane. Diese haben außerdem den weiteren Nachteil, dass bei Reaktion dieser Silane mit dem anionischen Polymerkettenende Komponenten wie Halogenide oder Alkoxygruppen abgespalten werden, wobei letztere leicht zu Alkoholen umgesetzt werden. Halogenide begünstigen die Korrosion; Alkohole können zur Verunreinigung des Prozesslösungsmittels führen. Ein weiterer Nachteil bei der Verwendung von Silanen als Funktionalisierungsreagenzien besteht darin, dass die daraus erhaltenen Siloxan terminierten Polymere nach der Funktionalisierung über die Si-OR-Gruppen an den Polymerkettenenden (bzw. über die Si-OH-Gruppen nach Hydrolyse der Si-OR-Gruppen) unter Ausbildung von Si-O-Si-Bindungen koppeln können, was zu einem unerwünschten Viskositätsanstieg der Kautschuke während der Aufarbeitung und Lagerung führt. Es wurden viele Methoden zur Verringerung dieses Viskositätsanstiegs bei Siloxan terminierten Polymeren beschrieben, wie beispielsweise der Zusatz von stabilisierenden Reagenzien auf Basis von Säure und Säurehalogeniden (EP 0 801 078 A1), Zusatz von Siloxan (EP 1 198 506 B1), Zusatz von langkettigen Alkoholen (EP 1 237 934 B1) oder Zusatz von Reagenzien zur Kontrolle des pH-Wertes (EP 1 726 598).

EP 0 778 311 B1 beschreibt u. a. Cyclosiloxane als Funktionalisierungsreagenzien zur Einführung von Si-OH-Gruppen an den Polymerkettenenden. Diese Cyclosiloxane haben gegenüber den oben genannten Silanen den Vorteil, dass nur jeweils ein anionisches Polymerkettenende pro Cyclosiloxan-Molekül reagieren kann. Es finden also während der Funktionalisierungsreaktion keine Kopplungen durch Addition von mehr als einer Polymerkette pro Funktionalisierungsreagenz statt. Die nach Einführung des Funktionalisierungsreagenzes gebildeten Si-OH-Endgruppen können jedoch, wie oben erläutert und auch in US 4,618,650 beschrieben, unter Ausbildung von Si-O-Si-Bindungen koppeln. Auch hier besteht also das Problem des unerwünschten Viskositätsanstiegs während der Aufarbeitung und Lagerung.

Es bestand daher die Aufgabe, funktionalisierte Polymere bereitzustellen, die die Nachteile des Standes der Technik nicht aufweisen und es insbesondere ermöglichen, die gute Reaktivität von Silanen mit anionischen Polymerkettenenden zu nutzen, ohne deren Nachteile, wie etwa Reaktion mehrerer anionischer Polymerkettenenden pro Silanmolekül, Abspaltung störender Komponenten und Kopplung unter Ausbildung von Si-O-Si-Bindungen bei der Aufarbeitung und Lagerung, zu haben.

Zur Lösung dieser Aufgabe werden funktionalisierte Dienpolymere vorgeschlagen, welche an den Polymerkettenanfängen tertiäre Aminogruppen der Formel (I) oder (II) 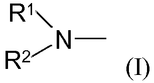 oder 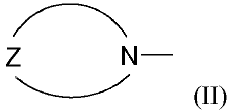 aufweisen, wobei
- R¹, R²: gleich oder verschieden sind und Alkyl-, Cycloalkyl-, Aryl-, Alkaryl- und Aralkylreste darstellen, die Heteroatome wie O, N, S und/oder Si enthalten können,
- Z: für einen divalenten organischen Rest steht, der neben C und H Heteroatome wie O, N, S und/oder Si enthalten kann
sowie an den Polymerkettenenden silanhaltige Carbinolgruppen der Formel (III) 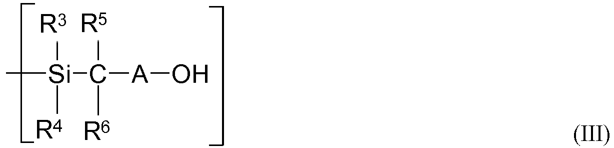 oder deren Metallsalze oder deren Halbmetallsalze aufweisen, wobei
- R³, R⁴, R⁵, R⁶: gleich oder verschieden sind und ein H, Alkyl-, Cycloalkyl-, Aryl-, Alkaryl- und Aralkylreste darstellen, die Heteroatome wie O, N, S und/oder Si enthalten können,
- A: für einen divalenten organischen Rest steht, der neben C und H Heteroatome wie O, N, S und/oder Si enthalten kann.

Bevorzugt können die silanhaltigen Carbinolgruppen der Formel (III) an den Polymerkettenenden der erfindungsgemäßen funktionalisierten Dienpolymere als Metallsalze der Formel (IV): 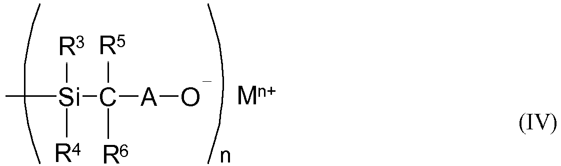 vorliegen, wobei
- R³, R⁴, R⁵, R⁶: gleich oder verschieden sind und für H, Alkyl-, Cycloalkyl-, Aryl-, Alkaryl- und Aralkylreste stehen, die Heteroatome wie O, N, S und/oder Si enthalten können,
- A: für einen divalenten organischen Rest steht, der neben C und H Heteroatome wie O, N, S und/oder Si enthalten kann,
- n: eine ganze Zahl von 1 bis 4 ist,
- M: ein Metall oder Halbmetall der Wertigkeit 1 bis 4 ist, vorzugsweise Li, Na, K, Mg, Ca, Fe, Co, Ni, Al, Nd, Ti, Si und/oder Sn.

Bevorzugte Polymere zur Herstellung der erfindungsgemäßen funktionalisierten Dienpolymere sind Dienpolymere und durch Copolymerisation von Dienen mit vinylaromatischen Monomeren erhältliche Dien-Copolymere.

Als Diene sind 1,3-Butadien, Isopren, 1,3-Pentadien, 2,3-Dimethylbutadien, 1-Phenyl-1,3-butadien und/oder 1,3-Hexadien bevorzugt. Besonders bevorzugt werden 1,3-Butadien und/oder Isopren eingesetzt.

Als vinylaromatische Comonomere können z. B. Styrol, o-, m- und/oder p-Methylstyrol, p*-tert-*Butylstyrol, α-Methylstyrol, Vinylnaphthalin, Divinylbenzol, Trivinylbenzol und/oder Divinylnaphthalin verwendet werden. Besonders bevorzugt wird Styrol eingesetzt.

Die Herstellung dieser Polymere erfolgt bevorzugt durch anionische Lösungspolymerisation.

Initiatoren für die anionische Lösungspolymerisation sind Alkaliamide von sekundären organischen Aminen, wie z.B. Lithiumpyrrolidid, Lithiumpiperidid, Lithiumhexamethylenimid, Lithium-1-methylimidazolidid, Lithium-1-methylpiperazid, Lithiummorpholid, Lithiumdiphenylamid, Lithiumdibenzylamid, Lithiumdicyclohexylamid, Lithiumdihexylamid, Lithiumdioctylamid. Des Weiteren können auch difunktionelle Alkaliamide eingesetzt werden, wie z.B. Dilithiumpiperazid.

Die Herstellung dieser Alkaliamide erfolgt bevorzugt durch Umsetzung der entsprechenden sekundären Amine mit alkaliorganischen Verbindungen. Bevorzugte alkaliorganische Verbindungen hierfür sind *n*-Butyllithium und *sec*-Butyllithium. Die Alkaliamide werden bevorzugt *in situ* im Polymerisationsreaktor durch Reaktion einer alkaliorganischen Verbindung mit sekundären Aminen hergestellt. Bevorzugte sekundäre Amine sind Pyrrolidine, Piperidine, Hexamethylenimine, 1-Alkylimidazolidine, 1-Alkylpiperazine, Morpholine, N,N-Diphenylamine, N,N-Dibenzylamine, N,N-Dicyclohexylamin, N,N-Dihexylamin, N,N-Dioctylamin.

Zusätzlich können die bekannten Randomizer und Kontrollagenzien für die Mikrostruktur des Polymers verwendet werden, wie z.B. Diethylether, Di-*n*-propylether, Diisopropylether, Di-*n-*butylether, Ethylenglykoldimethylether, Ethylenglykoldiethylether, Ethylengykoldi-*n*-butylether, Ethylengykoldi-*tert*-butylether, Diethylenglykoldimethylether, Diethylenglykoldiethylether, Diethylenglykoldi-*n*-butylether, Diethylenglykoldi-*tert*-butylether, 2-(2-Ethoxyethoxy)-2-methyl-propan, Triethylenglykoldimethylether, Tetrahydrofuran, Ethyltetrahydrofurfurylether, Hexyltetrahydrofurfurylether, 2,2-Bis(2-tetrahydrofuryl)propan, Dioxan, Trimethylamin, Triethylamin, N,N,N',N'-Tetramethylethylendiamin, N-Methylmorpholin, N-Ethylmorpholin, 1,2-Dipiperidinoethan, 1,2-Dipyrrolidinoethan, 1,2-Dimorpholinoethan sowie Kalium- und Natriumsalze von Alkoholen, Phenolen, Carbonsäuren, Sulfonsäuren.

Derartige Lösungspolymerisationen sind bekannt und z.B. in I. Franta, Elastomers and Rubber Compounding Materials; Elsevier 1989, Seite 113 - 131, in Houben-Weyl, Methoden der Organischen Chemie, Thieme Verlag, Stuttgart, 1961, Band XIV/1 Seiten 645 bis 673 oder im Band E 20 (1987), Seiten 114 bis 134 und Seiten 134 bis 153 sowie in Comprehensive Polymer Science, Vol. 3, Part I (Pergamon Press Ltd., Oxford 1989), Seiten 365-386 beschrieben.

Die Herstellung der bevorzugten Dienpolymere findet vorzugsweise in einem Lösungsmittel statt. Als Lösungsmittel für die Polymerisation werden vorzugsweise inerte aprotische Lösungsmittel, wie z.B. paraffinische Kohlenwasserstoffe, wie isomere Butane, Pentane, Hexane, Heptane, Octane, Decane, Cyclopentan, Cyclohexan, Methylcyclohexan, Ethylcyclohexan oder 1,4-Dimethylcyclohexan oder aromatische Kohlenwasserstoffe, wie Benzol, Toluol, Ethylbenzol, Xylol, Diethylbenzol oder Propylbenzol eingesetzt. Diese Lösungsmittel können einzeln oder in Kombination verwendet werden. Bevorzugt sind Cyclohexan und n-Hexan. Ebenfalls möglich ist die Abmischung mit polaren Lösungsmitteln.

Die Menge an Lösungsmittel beträgt bei dem erfindungsgemäßen Verfahren üblicherweise 100 bis 1000 g, bevorzugt 200 bis 700 g, bezogen auf 100 g der gesamten Menge an eingesetztem Monomer. Es ist aber auch möglich, die eingesetzten Monomere in Abwesenheit von Lösungsmitteln zu polymerisieren.

Die Polymerisation kann in der Weise durchgeführt werden, dass zuerst die Monomere, gegebenenfalls Kontrollagenzien zur Einstellung der Mikrostruktur und das Lösungsmittel vorgelegt werden und dann die Polymerisation durch Zugabe des Initiators gestartet wird. Es ist auch möglich in einem Zulaufverfahren zu polymerisieren, bei dem der Polymerisationsreaktor durch Zugabe von Monomeren, gegebenenfalls Kontrollagenzien zur Einstellung der Mikrostruktur und Lösungsmittel befüllt wird, wobei der Initiator vorgelegt wird oder mit den Monomeren, gegebenenfalls Kontrollagenzien zur Einstellung der Mikrostruktur und dem Lösungsmittel zugegeben wird. Variationen, wie Vorlegen des Lösungsmittels im Reaktor, Zugabe des Initiators und dann Zugabe der Monomere sowie gegebenenfalls Kontrollagenzien zur Einstellung der Mikrostruktur sind möglich. Weiterhin kann die Polymerisation in einer kontinuierlichen Fahrweise betrieben werden. Weitere Monomer-, Kontrollagenzien- und Lösungsmittelzugabe während oder am Ende der Polymerisation ist in allen Fällen möglich.

In einer bevorzugten Ausführungsform werden die Monomere, gegebenenfalls Kontrollagenzien zur Einstellung der Mikrostruktur, das Lösungsmittel sowie ein sekundäres Amin vorgelegt und die Polymerisation durch Zugabe einer alkaliorganischen Verbindung, wie BuLi, gestartet, wobei sich der alkaliamidische Initiator *in situ* durch Reaktion der alkaliorganischen Verbindung mit dem sekundären Amin ausbildet.

Die Polymerisationszeit kann in breiten Bereichen von einigen Minuten bis zu einigen Stunden schwanken. Üblicherweise wird die Polymerisation innerhalb einer Zeitspanne von etwa 10 Minuten bis zu 8 Stunden, bevorzugt 20 Minuten bis 4 Stunden, durchgeführt. Sie kann sowohl bei Normaldruck als auch bei erhöhtem Druck (1 bis 10 bar) durchgeführt werden.

Es wurde überraschend festgestellt, dass durch die Verwendung von alkaliamidischen Polymerisationsinitiatoren zur Einführung von tertiären Aminogruppen an den Polymerkettenanfängen in Kombination mit der Verwendung von einem oder mehreren 1-Oxa-2-silacycloalkanen als Funktionalisierungsreagenzien zur Einführung von funktionellen Gruppen an den Polymerkettenenden Dienpolymere hergestellt werden können, welche verbesserte Reifenlaufflächeneigenschaften aufweisen und die Nachteile des Standes der Technik nicht aufweisen. Beispielsweise können Kopplungen durch Mehrfachreaktionen am Funktionalisierungsreagenz, Abspaltung von störenden Komponenten sowie Kopplungen durch Ausbildung von Si-O-Si-Bindungen bei der Aufarbeitung und Lagerung nicht stattfinden.

Bei den alkaliamidischen Polymerisationsinitiatoren handelt es sich um Verbindungen der allgemeinen Formel (V) oder (VI) 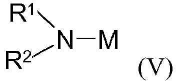 oder 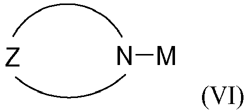 wobei
- R¹, R²: gleich oder verschieden sind und Alkyl-, Cycloalkyl-, Aryl-, Alkaryl- und Aralkylreste darstellen, die Heteroatome wie O, N, S und/oder Si enthalten können,
- Z: für einen divalenten organischen Rest steht, der neben C und H Heteroatome wie O, N, S und/oder Si enthalten kann
- M: für Li, Na oder K steht.

Bei den 1-Oxa-2-silacycloalkanen handelt es sich um Verbindungen der allgemeinen Formel (VII) 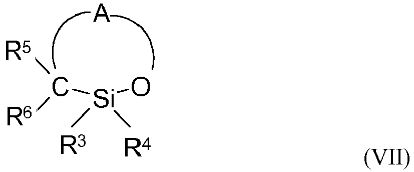 wobei
- R³, R⁴, R⁵, R⁶: gleich oder verschieden sind und für H, Alkyl-, Cycloalkyl-, Aryl-, Alkaryl- und Aralkylreste stehen, die Heteroatome wie O, N, S und/oder Si enthalten können.
- A: für einen divalenten organischen Rest steht, der neben C und H Heteroatome wie O, N, S und/oder Si enthalten kann.

Das Si-Atom der Formel (VII) ist dabei monofunktionell, wobei unter monofunktionell zu verstehen ist, dass das Si-Atom drei Si-C-Bindungen und eine Si-O-Bindung aufweist.

Beispiele für Verbindungen der Formel (VII) sind:
2,2-Dimethyl-1-oxa-2-silacyclohexan 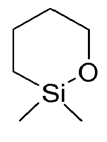
2,2-Diethyl-1-oxa-2-silacyclohexan 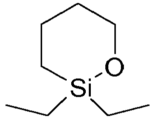
2,2-Dipropyl-1-oxa-2-silacyclohexan 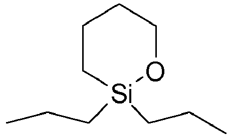
2-Methyl-2-phenyl-1-oxa-2-silacyclohexan 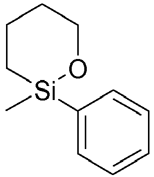
2,2-Diphenyl-1-oxa-2-silacyclohexan 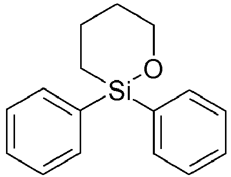
2,2,5,5-Tetramethyl-1-oxa-2-silacyclohexan 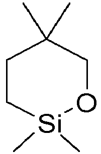
2,2,3-Trimethyl-1-oxa-2-silacyclohexan 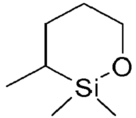
2,2-Dimethyl-1-oxa-2-silacyclopentan 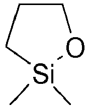
2,2,4-Trimethyl-1-oxa-2-silacyclopentan 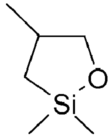
2,2-Dimethyl-1,4-dioxa-2-silacyclohexan 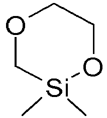
2,2,5,5-Tetramethyl-1,4-dioxa-2,5-disilacyclohexan 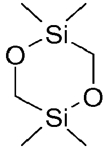
2,2,4-Trimethyl-[1,4,2]oxazasilinan 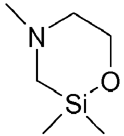
Benzo-2,2-dimethyl-1,4-dioxa-2-silacyclohexan 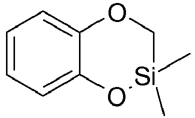
Benzo-2,2,4-trimethyl-1-oxa-4-aza-2-silacyclohexan

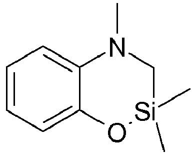

Es wurde festgestellt, dass die erfindungsgemäßen funktionalisierten Dienpolymere durch Reaktion von reaktiven Polymerkettenenden mit 1-Oxa-2-silacycloalkanen und gegebenenfalls nachfolgender Protonierung der Alkoholat-Endgruppe zum Alkohol hergestellt werden können.

Somit ist auch die Verwendung von 1-Oxa-2-silacycloalkanen als Funktionalisierungsreagenzien zur Herstellung der erfindungsgemäßen funktionalisierten Dienpolymere mit Endgruppen der Formel (III) oder (IV) Gegenstand der Erfindung.

Die erfindungsgemäßen funktionalisierten Dienpolymere weisen vorzugsweise mittlere Molgewichte (Zahlenmittel) von 10 000 bis 2 000 000 g/mol, bevorzugt 100 000 bis 1000 000 g/mol und Glasübergangstemperaturen von -110°C bis +20°C, bevorzugt -110°C bis 0°C, sowie Mooney-Viskositäten ML 1+4 (100°C) von 10 bis 200, vorzugsweise 30 bis 150 Mooney-Einheiten auf.

Ein weiterer Gegenstand der Erfindung ist ein Verfahren zur Herstellung der erfindungsgemäßen funktionalisierten Dienpolymere, wonach Alkaliamide von sekundären organischen Aminen als Polymerisationsinitiatoren eingesetzt werden sowie eine oder mehrere Verbindungen der Formel (VII), als Reinstoff, Lösung oder Suspension, zur Reaktion mit den reaktiven Polymerkettenenden verwendet werden. Die Zugabe der Verbindungen der Formel (VII) erfolgt bevorzugt nach Abschluss der Polymerisation; sie kann aber auch vor vollständigem Monomerumsatz erfolgen. Die Reaktion von Verbindungen der Formel (VII) mit den reaktiven Polymerkettenenden erfolgt bei den üblicherweise für die Polymerisation verwendeten Temperaturen. Die Reaktionszeiten für die Umsetzung von Verbindungen nach Formel (VII) mit den reaktiven Polymerkettenenden können zwischen einigen Minuten bis mehreren Stunden liegen.

Vorzugsweise sind die eingesetzten Alkaliamide in Lösung. Bevorzugt wird dabei dasselbe Lösungsmittel eingesetzt, das auch für die Polymerisation verwendet wird. Es können aber auch Lösungsmittel oder Lösungsmittelgemische mit höherer Polarität Verwendung finden, um ein Ausfällen der Alkaliamide zu verhindern.

Bevorzugt wird ein Verfahren zur Herstellung der erfindungsgemäßen funktionalisierten Dienpolymere, bei dem die Polymerisationsinitiatoren durch Umsetzung von sekundärem Amin mit alkaliorganischen Verbindungen in einem separaten Präformierungsschritt oder *in situ* direkt im Polymerisationsreaktor zur Bildung von Alkaliamiden eingesetzt werden sowie eine oder mehrere Verbindungen der Formel (VII), als Reinstoff, Lösung oder Suspension, zur Reaktion mit den reaktiven Polymerkettenenden verwendet werden. Die Zugabe der Verbindungen der Formel (VII) erfolgt bevorzugt nach Abschluss der Polymerisation; sie kann aber auch vor vollständigem Monomerumsatz erfolgen. Die Reaktion von Verbindungen der Formel (VII) mit den reaktiven Polymerkettenenden erfolgt bei den üblicherweise für die Polymerisation verwendeten Temperaturen. Die Reaktionszeiten für die Umsetzung von Verbindungen nach Formel (VII) mit den reaktiven Polymerkettenenden können zwischen einigen Minuten bis mehreren Stunden liegen.

Vorzugsweise ist die Menge an sekundären Aminen gleich oder kleiner als die Menge an alkaliorganischen Verbindungen, besonders bevorzugt ist ein Stoffmengenverhältnis zwischen sekundären Aminen und alkaliorganischen Verbindungen von 0,05 - 2,00 : 0,05 - 2,00.

Es hat sich herausgestellt, dass mit diesem Mengenverhältnis die Polymerkettenenden mit silanhaltigen Carbinolverbindungen funktionalisiert werden, so dass Polymere mit Funktionalisierung an beiden Enden gebildet werden, die verbesserte Reifenlaufflächeneigenschaften aufweisen, wobei Kopplungen durch Mehrfachreaktionen am Funktionalisierungsreagenz, Abspaltung von störenden Komponenten sowie Kopplungen durch Ausbildung von Si-O-Si-Bindungen bei der Aufarbeitung und Lagerung der Polymere vermieden werden.

Die Menge der 1-Oxa-2-silacycloalkane der Formel (VII) kann so gewählt werden, dass alle reaktiven Polymerkettenenden mit Verbindungen der Formel (VII) reagieren, oder es kann ein Unterschuss dieser Verbindungen eingesetzt werden. Die eingesetzten Mengen der Verbindungen nach Formel (VII) können einen weiten Bereich abdecken. Die bevorzugten Mengen liegen zwischen 0,005 - 2 Gew.-%, besonders bevorzugt zwischen 0,01 - 1 Gew.-%, bezogen auf die Menge an Polymer.

Zusätzlich zu Verbindungen nach Formel (VII) können auch die für die anionische Dienpolymerisation typischen Kopplungsreagenzien zur Reaktion mit den reaktiven Polymerkettenenden eingesetzt werden. Beispiele für solche Kopplungsreagenzien sind Siliciumtetrachlorid, Methyltrichlorsilan, Dimethyldichlorsilan, Zinntetrachlorid, Dibutylzinndichlorid, Tetraalkoxysilane, Ethylenglykoldiglycidylether, 1,2,4-Tris(chlormethyl)benzol. Solche Kopplungsreagenzien können vor den Verbindungen der Formel (VII) zugesetzt werden, zusammen mit diesen oder nach diesen.

Nach erfolgter Zugabe von Verbindungen der Formel (VII) und gegebenenfalls von Kopplungsreagenzien werden vor oder während der Aufarbeitung der erfindungsgemäßen funktionalisierten Polymere bevorzugt die üblichen Alterungsschutzmittel, wie sterisch gehinderte Phenole, aromatische Amine, Phosphite, Thioether, zugesetzt. Weiterhin können die üblichen, für Dienkautschuke verwendeten Strecköle, wie DAE (Distillate Aromatic Extract)-, TDAE (Treated Distillate Aromatic Extract)-, MES (Mild Extraction Solvates)-, RAE (Residual Aromatic Extract) - , TRAE (Treated Residual Aromatic Extract)-, naphthenische und schwere naphthenische Öle zugegeben werden. Auch die Zugabe von Füllstoffen, wie Ruß und Kieselsäure, Kautschuken und Kautschukhilfsmitteln ist möglich.

Die Entfernung des Lösungsmittels aus dem Polymerisationsprozess kann nach den üblichen Verfahren, wie Destillation, Strippen mit Wasserdampf oder Anlegen eines Vakuums, gegebenenfalls bei höherer Temperatur, erfolgen.

Ein weiterer Erfindungsgegenstand ist die Verwendung der erfindungsgemäßen funktionalisierten Polymere zur Herstellung von vulkanisierbaren Kautschukzusammensetzungen.

Vorzugsweise weisen diese vulkanisierbaren Kautschukzusammensetzungen weitere Kautschuke, Füllstoffe, Kautschukchemikalien, Verarbeitungshilfsmittel und Strecköle auf.

Zusätzliche Kautschuke sind beispielsweise Naturkautschuk sowie Synthesekautschuke. Sofern vorhanden liegt deren Menge üblicherweise im Bereich von 0,5 bis 95, bevorzugt 10 bis 80 Gew.-%, bezogen auf die gesamte Polymermenge in der Mischung. Die Menge an zusätzlich zugegebenen Kautschuken richtet sich wieder nach dem jeweiligen Verwendungszweck der erfindungsgemäßen Mischungen.

Exemplarisch sind hier literaturbekannte Synthesekautschuke aufgeführt. Sie umfassen u. a.
- BR -: Polybutadien
- ABR - -: Butadien/Acrylsäure-C₁-C₄-Alkylester-Copolymere
- IR -: Polyisopren
- E-SBR -: Styrol-Butadien-Copolymerisate mit Styrolgehalten von 1-60, vorzugsweise 20-50 Gew.-%, hergestellt durch Emulsionspolymerisation
- S-SBR -: Styrol-Butadien-Copolymerisate mit Styrolgehalten von 1-60, vorzugsweise 15-45 Gew.-%, hergestellt durch Lösungspolymerisation
- IIR -: Isobutylen-Isopren-Copolymerisate
- NBR -: Butadien-Acrylnitril-Copolymere mit Acrylnitrilgehalten von 5-60, vorzugsweise 10-40 Gew.-%
- HNBR -: teilhydrierter oder vollständig hydrierter NBR-Kautschuk
- EPDM -: Ethylen-Propylen-Dien-Terpolymerisate
sowie Mischungen dieser Kautschuke. Für die Herstellung von Kfz-Reifen sind insbesondere Naturkautschuk, E-SBR sowie S-SBR mit einer Glastemperatur oberhalb von -60°C, Polybutadienkautschuk mit hohem cis-Gehalt (> 90 %), der mit Katalysatoren auf Basis Ni, Co, Ti oder Nd hergestellt wurde, sowie Polybutadienkautschuk mit einem Vinylgehalt von bis zu 80 % sowie deren Mischungen von Interesse.

Als Füllstoffe kommen für die erfindungsgemäßen Kautschukzusammensetzungen alle bekannten in der Kautschukindustrie verwendeten Füllstoffe in Betracht. Diese umfassen sowohl aktive als auch inaktive Füllstoffe.

Zu erwähnen sind beispielhaft:
- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-, Ti-Oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Metallsulfate, wie Calciumsulfat, Bariumsulfat;
- Ruße: Die hierbei zu verwendenden Ruße sind nach dem Flammruß-, dem Channel-, Furnace-, Gasruß-, Thermal-, Acetylenruß- oder Lichtbogenverfahren hergestellte Ruße und besitzen BET-Oberflächen von 9 - 200 m²/g, z.B. SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- und MT-Ruße bzw. nach ASTMN110-,N219-, N220-, N231-, N234-, N242-, N294-, N326-, N327-, N330-, N332-, N339-, N347-, N351-, N356-, N358-, N375-, N472-, N539-, N550-, N568-, N650-, N660-, N754-, N762-, N765-, N774-, N787- und N990-Ruße.
- Kautschukgele, insbesondere solche auf Basis von BR, E-SBR und/oder Polychloropren mit Teilchengrößen von 5 bis 1000 nm.

Bevorzugt werden als Füllstoffe hochdisperse Kieselsäuren und/oder Ruße eingesetzt.

Die genannten Füllstoffe können alleine oder im Gemisch eingesetzt werden. In einer besonders bevorzugten Ausführungsform enthalten die Kautschukzusammensetzungen als Füllstoffe ein Gemisch aus hellen Füllstoffen, wie hochdispersen Kieselsäuren, und Rußen, wobei das Mischungsverhältnis von hellen Füllstoffen zu Rußen bei 0,01:1 bis 50:1 bevorzugt 0,05:1 bis 20:1 liegt.

Die Füllstoffe werden hierbei in Mengen im Bereich von 10 bis 500 Gew.-Teile bezogen auf 100 Gew.-Teile Kautschuk eingesetzt. Bevorzugt werden 20 bis 200 Gew.-Teile eingesetzt.

In einer weiteren Ausführungsform der Erfindung enthalten die Kautschukzusammensetzungen noch Kautschukhilfsmittel, die beispielsweise die Verarbeitungseigenschaften der Kautschukzusammensetzungen verbessern, der Vernetzung der Kautschukzusammensetzungen dienen, die physikalischen Eigenschaften der aus den erfindungsgemäßen Kautschukzusammensetzungen hergestellten Vulkanisate für deren speziellen Einsatzzweck verbessern, die Wechselwirkung zwischen Kautschuk und Füllstoff verbessern oder zur Anbindung des Kautschuks an den Füllstoff dienen.

Kautschukhilfsmittel sind z.B. Vernetzeragentien, wie z.B. Schwefel oder Schwefel liefernde Verbindungen, sowie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Silane, Verzögerer, Metalloxide, Strecköle, wie z.B. DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle sowie Aktivatoren.

Die gesamte Menge an Kautschukhilfsmitteln liegt im Bereich von 1 bis 300 Gewichtsteilen, bezogen auf 100 Gewichtsteile an Gesamtkautschuk. Bevorzugt werden 5 bis 150 Gewichtsteile an Kautschukhilfsmitteln eingesetzt.

Die Herstellung der vulkanisierbaren Kautschukzusammensetzungen kann in einem einstufigen oder in einem mehrstufigen Verfahren erfolgen, wobei 2 bis 3 Mischstufen bevorzugt sind. So kann z.B. die Zugabe von Schwefel und Beschleuniger in einer separaten Mischstufe z.B. auf einer Walze erfolgen, wobei Temperaturen im Bereich 30°C bis 90°C bevorzugt sind. Bevorzugt erfolgt die Zugabe von Schwefel und Beschleuniger in der letzen Mischstufe.

Für die Herstellung der vulkanisierbaren Kautschukzusammensetzungen geeignete Aggregate sind beispielsweise Walzen, Kneter, Innenmischer oder Mischextruder.

Somit sind vulkanisierbare Kautschukzusammensetzungen enthaltend funktionalisierte Dienpolymere mit tertiären Aminogruppen der Formel (I) oder (II) an den Polymerkettenanfängen und funktionellen Gruppen der Formel (III) oder (IV) an den Polymerkettenenden ein weiterer Gegenstand der Erfindung.

Die Kautschukzusammensetzungen können auch funktionalisierte Dienpolymere mit tertiären Aminogruppen der Formel (I) oder (II) an den Polymerkettenanfängen und funktionellen Gruppen der Formel (III) und (IV) an den Polymerkettenenden enthalten.

Ein weiterer Gegenstand der Erfindung ist die Verwendung der erfindungsgemäßen vulkanisierbaren Kautschukzusammensetzungen zur Herstellung von Kautschukvulkanisaten, insbesondere für die Herstellung von Reifen, insbesondere Reifenlaufflächen, die einen besonders geringen Rollwiderstand bei hoher Nassrutschfestigkeit und Abriebbeständigkeit aufweisen.

Die erfindungsgemäßen vulkanisierbaren Kautschukzusammensetzungen eignen sich auch zur Herstellung von Formkörpern, z.B. für die Herstellung von Kabelmänteln, Schläuchen, Treibriemen, Förderbändern, Walzenbelägen, Schuhsohlen, Dichtungsringen und Dämpfungselementen.

Die nachfolgenden Beispiele dienen der Erläuterung der Erfindung, ohne dabei limitierend zu wirken. Beispiele

### Beispiel 1a: Synthese von Styrol-Butadien-Copolymer, nicht funktionalisiert (Vergleichsbeispiel)

Ein inertisierter 20L-Reaktor wurde mit 8,5 kg Hexan, 1185 g 1,3-Butadien, 315 g Styrol, 8 mmol 2,2-Bis(2-tetrahydrofuryl)propan sowie 10,3 mmol n-Butyllithium befüllt und der Inhalt auf 65°C erwärmt. Es wurde unter Rühren 25 min bei 65°C polymerisiert. Anschließend wurden 10,3 mmol Cetylalkohol zugesetzt, die Kautschuklösung abgelassen, durch Zugabe von 3 g Irganox® 1520 (2,4-Bis(octylthiomethyl)-6-methylphenol) stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 50,2 Gew.-%; Styrol-Gehalt (IR-spektroskopisch): 20,9 Gew.-%, Glasübergangstemperatur (DSC): -25,6°C; zahlenmittleres Molekulargewicht Mₙ (GPC, PS-Standard): 258 kg/mol; M_{w}/Mₙ: 1,15; Mooney-Viskosität (ML1+4 bei 100°C): 52 ME

### Beispiel 1b: Synthese von Styrol-Butadien-Copolymer mit tertiärer Aminogruppe am Kettenanfang (Vergleichsbeispiel)

Ein inertisierter 20L-Reaktor wurde mit 8,5 kg Hexan, 1185 g 1,3-Butadien, 315 g Styrol, 11,3 mmol 2,2-Bis(2-tetrahydrofuryl)propan, 14,1 mmol Pyrrolidin sowie 14,1 mmol n-Butyllithium befüllt und der Inhalt auf 65°C erwärmt. Es wurde unter Rühren 25 min bei 65°C polymerisiert. Anschließend wurden 14,1 mmol Cetylalkohol zugesetzt, die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 50,0 Gew.-%; Styrol-Gehalt (IR-spektroskopisch): 20,8 Gew.-%, Glasübergangstemperatur (DSC): -25,9°C; zahlenmittleres Molekulargewicht Mₙ (GPC, PS-Standard): 210 kg/mol; M_{w}/Mₙ: 1,19; Mooney-Viskosität (ML1+4 bei 100°C): 41 ME

### Beispiel 1c: Synthese von Styrol-Butadien-Copolymer mit Funktionalisierung am Kettenende durch Umsetzung mit Funktionalisierungsreagenz der Formel (VII) (Vergleichsbeispiel)

Ein inertisierter 20L-Reaktor wurde mit 8,5 kg Hexan, 1185 g 1,3-Butadien, 315 g Styrol, 8,2 mmol 2,2-Bis(2-tetrahydrofuryl)propan sowie 10,55 mmol n-Butyllithium befüllt und der Inhalt auf 65°C erwärmt. Es wurde unter Rühren 25 min bei 65°C polymerisiert. Danach wurden 10,55 mmol (1,69 mL) 2,2,4-Trimethyl-[1,4,2]oxazasilinan zugegeben und der Reaktorinhalt weitere 20 min auf 65°C erwärmt. Anschließend wurde die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 50,3 Gew.-%; Styrol-Gehalt (IR-spektroskopisch): 20,9 Gew.-%, Glasübergangstemperatur (DSC): -25,7°C; zahlenmittleres Molekulargewicht Mₙ (GPC, PS-Standard): 216 kg/mol; M_{w}/Mₙ: 1,18; Mooney-Viskosität (ML1+4 bei 100°C): 44 ME

### Beispiel 1 d: Synthese von Styrol-Butadien-Copolymer mit tertiärer Aminogruppe am Kettenanfang und Funktionalisierung am Kettenende durch Umsetzung mit Funktionalisierungsreagenz der Formel (VII) (erfindungsgemäß)

Ein inertisierter 20L-Reaktor wurde mit 8,5 kg Hexan, 1185 g 1,3-Butadien, 315 g Styrol, 11,3 mmol 2,2-Bis(2-tetrahydrofuryl)propan, 14,1 mmol Pyrrolidin sowie 14,1 mmol n-Butyllithium befüllt und der Inhalt auf 65°C erwärmt. Es wurde unter Rühren 25 min bei 65°C polymerisiert. Danach wurden 14,1 mmol (2,26 mL) 2,2,4-Trimethyl-[1,4,2]oxazasilinan zugegeben und der Reaktorinhalt weitere 20 min auf 65°C erwärmt. Anschließend wurde die Kautschuklösung abgelassen, durch Zugabe von 3 g Irganox® 1520 stabilisiert und das Lösungsmittel durch Strippen mit Wasserdampf entfernt. Die Kautschukkrümel wurden bei 65°C im Vakuum getrocknet.

Vinyl-Gehalt (IR-spektroskopisch): 49,3 Gew.-%; Styrol-Gehalt (IR-spektroskopisch): 20,3 Gew.-%, Glasübergangstemperatur (DSC): -26,3°C; zahlenmittleres Molekulargewicht Mₙ (GPC, PS-Standard): 170 kg/mol; M_{w}/Mₙ: 1,29; Mooney-Viskosität (ML1+4 bei 100°C): 43 ME

### Beispiele 2 a-d: Kautschukzusammensetzungen

Es wurden Kautschukzusammensetzungen für Reifenlaufflächen hergestellt, wobei die Styrol-Butadien-Copolymeren der Beispiele 1a - 1d verwendet wurden.

Die Bestandteile sind in Tabelle 1 aufgelistet. Die Kautschukzusammensetzungen (ohne Schwefel und Beschleuniger) wurden in einem 1,5-L Kneter hergestellt. Schwefel und Beschleuniger wurden anschließend auf einer Walze bei 40°C zugemischt.

### Beispiele 3 a-d: Vulkanisateigenschaften

Zur Bestimmung der Vulkanisateigenschaften wurden die Kautschukzusammensetzungen der Beispiele 2a-d für 20 Minuten bei 160°C vulkanisiert. Die Eigenschaften der entsprechenden Vulkanisate sind in Tabelle 2 als Beispiele 3a-d aufgeführt.

An den Vulkanisaten wurden folgende Eigenschaften bestimmt:
- Rückprallelastizität bei 60°C (gemäß DIN 53512)
- Abrieb (gemäß DIN 53516)
- ΔG*: Differenz aus den frequenzabhängigen viskoelastischen Moduli G* bei 0,5% Dehnung und 15% Dehnung bei 60°C/1Hz (MTS-Amplitudensweep)
- tanδ-Maximum: Maximum der dynamischen Dämpfung bei der Messung des frequenzabhängigen viskoelastischen Moduls bei 60°C/1Hz mit tanδ = G"/G' (MTS-Amplitudensweep)
- tanδ bei 0°C, 60°C: aus der Messung der temperaturabhängigen dynamischen Dämpfung nach DIN 53513 (10 Hz, Heizrate 1K·min⁻¹) mit tanδ = E"/E'
- Reißdehnung, Reißspannung (gemäß DIN 53504)

Die Rückprallelastizität bei 60°C, ΔG*, tanδ-Maximum (MTS) und tanδ bei 60°C sind Indikatoren für den Hystereseverlust beim Rollen des Reifens (Rollwiderstand). Je höher die Rückprallelastizität bei 60°C und je niedriger ΔG*, tanδ-Maximum (MTS) und tanδ bei 60°C umso geringer ist der Rollwiderstand des Reifens. Tanδ bei 0°C ist ein Maß für die Nassrutschfestigkeit des Reifens. Je höher tanδ bei 0°C umso höher ist die zu erwartende Nassrutschfestigkeit des Reifens.

**Tabelle 1: Bestandteile der Kautschukzusammensetzungen (Angaben in phr: Gewichtsteile pro 100 Gewichtsteile Kautschuk)**

| | **Vergleichsbeispiel 2a** | **Vergleichsbeispiel 2b** | **Vergleichsbeispiel 2c** | **Erfindungsgemäßes Beispiel 2d** |
|---|---|---|---|---|
| Styrol-Butadien-Copolymer gemäß Beispiel 1a | 70 | 0 | 0 | 0 |
| Styrol-Butadien-Copolymer gemäß Beispiel 1b | 0 | 70 | 0 | 0 |
| Styrol-Butadien-Copolymer gemäß Beispiel 1c | 0 | 0 | 70 | 0 |
| Styrol-Butadien-Copolymer, gemäß Beispiel 1d | 0 | 0 | 0 | 70 |
| hoch-cis-haltiges Polybutadien (BUNA™ CB 24 der Lanxess Deutschland GmbH) | 30 | 30 | 30 | 30 |
| Kieselsäure (Ultrasil® 7000) | 90 | 90 | 90 | 90 |
| Ruß (Vulcan® J/N 375) | 7 | 7 | 7 | 7 |
| TDAE-Öl (Vivatec 500) | 36,3 | 36,3 | 36,3 | 36,3 |
| Verarbeitungshilfsmittel (Aflux 37 der RheinChemie Rheinau GmbH) | 3 | 3 | 3 | 3 |
| Stearinsäure (Edenor C 18 98-100) | 1 | 1 | 1 | 1 |
| Alterungsschutzmittel (Vulkanox® 4020/LG der Lanxess Deutschland GmbH) | 2 | 2 | 2 | 2 |
| Alterungsschutzmittel (Vulkanox® HS/LG der Lanxess Deutschland GmbH) | 2 | 2 | 2 | 2 |
| Zinkoxid (Zinkweiß Rotsiegel) | 3 | 3 | 3 | 3 |
| Wachs (Antilux 654) | 2 | 2 | 2 | 2 |
| Silan (Si 69® von Evonik) | 7,2 | 7,2 | 7,2 | 7,2 |
| Diphenylguanidin (Rhenogran DPG 80) | 2,75 | 2,75 | 2,75 | 2,75 |
| Sulfenamid (Vulkacit® NZ/EGC der Lanxess Deutschland GmbH) | 1,6 | 1,6 | 1,6 | 1,6 |
| Schwefel (Mahlschwefel 90/95 Chancel) | 1,6 | 1,6 | 1,6 | 1,6 |
| Sulfonamid (Vulkalent® E/C) | 0,2 | 0,2 | 0,2 | 0,2 |

**Tabelle 2: Vulkanisateigenschaften**

| | **Vergleichsbeispiel 3a** | **Vergleichsbeispiel 3b** | **Vergleichsbeispiel 3c** | **Erfindungsgemäßes Beispiel 3d** |
|---|---|---|---|---|
| Vergleichsbeispiel 2a | X | | | |
| Vergleichsbeispiel 2b | | X | | |
| Vergleichsbeispiel 2c | | | X | |
| Vergleichsbeispiel 2d | | | | X |
| **Vulkanisateigenschaften:** | | | | |
| Rückprallelastizität bei 60°C [%] | 56,2 | 57,2 | 58,7 | 59,2 |
| ΔG* (G*@0.5% - G*@15%) [MPa] | 1,37 | 1,37 | 1,08 | 0,78 |
| tan δ-Maximum (MTS-Amplitudensweep bei 1 Hz, 60°C) | 0,173 | 0,161 | 0,156 | 0,141 |
| tan δ bei 0°C (dynamische Dämpfung bei 10Hz) | 0,269 | 0,263 | 0,279 | 0,294 |
| tan δ bei 60°C (dynamische Dämpfung bei 10 Hz) | 0,103 | 0,093 | 0,085 | 0,077 |
| Reißdehnung (S2-Probekörper) [%] | 457 | 414 | 449 | 422 |
| Reißspannung (S2-Probekörper) [MPa] | 19,4 | 18,6 | 20,8 | 20,4 |
| Abrieb (DIN 53516) [mm³] | 69 | 70 | 74 | 73 |

Für Reifenanwendungen wird ein niedriger Rollwiderstand benötigt, der dann gegeben ist, wenn im Vulkanisat ein hoher Wert für die Rückprallelastizität bei 60°C sowie ein niedriger tanδ-Wert in der dynamischen Dämpfung bei hoher Temperatur (60°C) und ein niedriges tan δ-Maximum im MTS-Amplitudensweep gemessen werden. Wie aus Tabelle 2 ersichtlich, zeichnet sich das Vulkanisat des erfindungsgemäßen Beispiels 3d durch eine hohe Rückprallelastizität bei 60°C, einen niedrigen tanδ-Wert in der dynamischen Dämpfung bei 60°C sowie ein niedriges tan δ-Maximum im MTS-Amplitudensweep aus.

Für Reifenanwendungen wird zudem eine hohe Nassrutschfestigkeit benötigt, die dann gegeben ist, wenn das Vulkanisat einen hohen tanδ-Wert in der dynamischen Dämpfung bei tiefer Temperatur (0°C) aufweist. Wie aus Tabelle 2 ersichtlich, zeichnet sich das Vulkanisat des erfindungsgemäßen Beispiels 3d durch einen hohen tanδ-Wert in der dynamischen Dämpfung bei 0°C aus.

## Patentansprüche

1. Dienpolymere **dadurch gekennzeichnet, dass** die Dienpolymere an den Polymerkettenanfängen tertiäre Aminogruppen der Formel (I) oder (II) 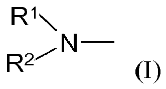 oder 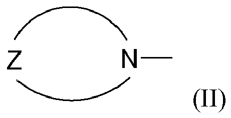 aufweisen, wobei
R¹, R² gleich oder verschieden sind und Alkyl-, Cycloalkyl-, Aryl-, Alkaryl- und Aralkylreste darstellen, die Heteroatome wie O, N, S und/oder Si enthalten können,
Z für einen divalenten organischen Rest steht, der neben C und H Heteroatome wie O, N, S und/oder Si enthalten kann
sowie an den Polymerkettenenden silanhaltige Carbinolgruppen der Formel (III) 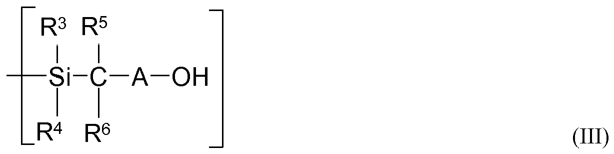 oder deren Metallsalze oder deren Halbmetallsalze aufweisen, wobei
R³, R⁴, R⁵, R⁶ gleich oder verschieden sind und ein H, Alkyl-, Cycloalkyl-, Aryl-, Alkaryl- und Aralkylreste darstellen, die Heteroatome wie O, N, S und/oder Si enthalten können,
A für einen divalenten organischen Rest steht, der neben C und H Heteroatome wie O, N, S und/oder Si enthalten kann.

2. Dienpolymere nach Anspruch 1, **dadurch gekennzeichnet, dass** die silanhaltigen Carbinolgruppen der Formel (III) an den Polymerkettenenden der Dienpolymere als Metallsalze der Formel (IV) 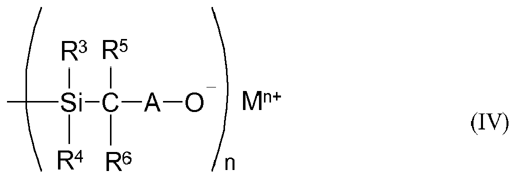 vorliegen, wobei
R³, R⁴, R⁵, R⁶ gleich oder verschieden sind und ein H, Alkyl-, Cycloalkyl-, Aryl-, Alkaryl- und Aralkylreste darstellen, die Heteroatome wie O, N, S und/oder Si enthalten können,
A für einen divalenten organischen Rest steht, der neben C und H Heteroatome wie O, N, S und/oder Si enthalten kann,
n eine ganze Zahl von 1 bis 4 ist,
M ein Metall oder Halbmetall der Wertigkeit 1 bis 4 ist, vorzugsweise Li, Na, K, Mg, Ca, Fe, Co, Ni, Al, Nd, Ti, Si und/oder Sn.

3. Dienpolymere nach Anspruch 1 oder 2, **dadurch gekennzeichnet, dass** das Dienpolymer ein Polybutadien, ein Polyisopren, ein Butadien-Isopren-Copolymer, ein Butadien-Styrol-Copolymer, ein Isopren-Styrol-Copolymer oder ein Butadien-Isopren-Styrol-Terpolymer ist.

4. Dienpolymere nach Anspruch 1, **dadurch gekennzeichnet, dass** die Dienpolymere mittlere Molgewichte (Zahlenmittel) von 10000 bis 2000000 g/mol, bevorzugt 100000 bis 1000000 g/mol aufweisen.

5. Dienpolymere nach Anspruch 1, **dadurch gekennzeichnet, dass** die Dienpolymere Glasübergangstemperaturen von -110°C bis +20°C, bevorzugt -110°C bis 0°C aufweisen.

6. Dienpolymere nach Anspruch 1, **dadurch gekennzeichnet, dass** die Dienpolymere Mooney-Viskositäten [ML 1+4 (100°C)] von 10 bis 200, vorzugsweise 30 bis 150 Mooney-Einheiten aufweisen.

7. Verfahren zur Herstellung von Dienpolymeren nach Anspruch 1, **dadurch gekennzeichnet, dass** als Funktionalisierungsreagenz zur Einführung von funktionellen Gruppen an den Polymerkettenenden ein oder mehrere 1-Oxa-2-silacycloalkane und zur Einführung von tertiären Aminogruppen an den Polymerkettenanfängen Alkaliamide von sekundären organischen Aminen der allgemeinen Formel (V) oder (VI) eingesetzt werden. 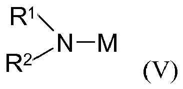 oder 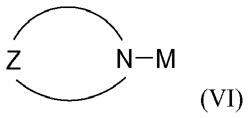 wobei
R¹, R² gleich oder verschieden sind und Alkyl-, Cycloalkyl-, Aryl-, Alkaryl- und Aralkylreste darstellen, die Heteroatome wie O, N, S und/oder Si enthalten können,
Z für einen divalenten organischen Rest steht, der neben C und H Heteroatome wie O, N, S und/oder Si enthalten kann,
M für Li, Na, K steht.

8. Verfahren nach Anspruch 7, **dadurch gekennzeichnet, dass** es sich bei den 1-Oxa-2-silacycloalkanen um Verbindungen der allgemeinen Formel (VII) 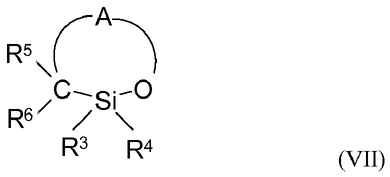 handelt, wobei
R³, R⁴,R⁵, R⁶ gleich oder verschieden sind und für H, Alkyl-, Cycloalkyl-, Aryl-, Alkaryl- und Aralkylreste stehen, die Heteroatome wie O, N, S und/oder Si enthalten können.
A für einen divalenten organischen Rest steht, der neben C und H Heteroatome wie O, N, S und/oder Si enthalten kann.

9. Verfahren zur Herstellung von Dienpolymeren nach Anspruch 7, **dadurch gekennzeichnet, dass** Alkaliamide durch Umsetzung von sekundären organischen Aminen mit alkaliorganischen Verbindungen in situ oder in einem separaten Präformierungsschritt verwendet werden sowie ein oder mehrere 1-Oxa-2-silacycloalkane zur Reaktion mit den reaktiven Polymerkettenenden eingesetzt werden.

10. Verfahren nach Anspruch 7, **dadurch gekennzeichnet, dass** die Zugabe der 1-Oxa-2-silacycloalkane nach Abschluss der Polymerisation erfolgt.

11. Verfahren nach Anspruch 9, **dadurch gekennzeichnet dass** die Alkaliamide als anionische Polymerisationsinitiatoren eingesetzt werden.

12. Verfahren nach Anspruch nach Anspruch 9, **dadurch gekennzeichnet, dass** als sekundäre organische Amine Pyrrolidin oder Hexamethylenimin und als alkaliorganische Verbindung Butyllithium eingesetzt werden.

13. Verfahren nach Anspruch 9, **dadurch gekennzeichnet, dass** die Stoffmenge an sekundären Aminen gleich oder kleiner ist als die Stoffmenge an alkaliorganischen Verbindungen; besonders bevorzugt beträgt das Stoffmengenverhältnis 0,05 - 2,00 : 0,05 - 2,00.

14. Verfahren nach einem der Ansprüche 7 **dadurch gekennzeichnet, dass** die Menge an 1-Oxa-2-silacycloalkanen zwischen 0,005 - 2 Gew.-%, bevorzugt zwischen 0,01 - 1 Gew.-%, bezogen auf die Menge an Polymer mit reaktiven Polymerkettenenden, liegt.

15. Verfahren nach Anspruch 7, **dadurch gekennzeichnet, dass** Kopplungsreagenzien zur Umsetzung eingesetzt werden.

16. Verwendung von Dienpolymeren nach einem der Ansprüche 1 - 6 zur Herstellung von vulkanisierbaren Kautschukzusammensetzungen.

17. Vulkanisierbare Kautschukzusammensetzungen erhältlich nach Anspruch 16, **dadurch gekennzeichnet, dass** sie Alterungsschutzmittel, Öle, Füllstoffe, Kautschuke und/oder Kautschukhilfsmittel aufweisen.

18. Vulkanisierbare Kautschukzusammensetzungen enthaltend Dienpolymeren nach Ansprüchen 1 oder 2.

19. Vulkanisierbare Kautschukzusammensetzungen enthaltend funktionalisierte Dienpolymere mit tertiären Aminogruppen der Formel (I) oder (II) an den Polymerkettenanfängen und funktionellen Gruppen der Formel (III) an den Polymerkettenenden nach Anspruch 1.

20. Vulkanisierbare Kautschukzusammensetzungen enthaltend funktionalisierte Dienpolymere mit tertiären Aminogruppen der Formel (I) oder (II) an den Polymerkettenanfängen nach Anspruch 1 und funktionellen Gruppen der Formel (IV) an den Polymerkettenenden nach Anspruch 2.

21. Vulkanisierbare Kautschukzusammensetzungen enthaltend funktionalisierte Dienpolymere mit tertiären Aminogruppen der Formel (I) oder (II) an den Polymerkettenanfängen nach Anspruch 1 und funktionellen Gruppen der Formel (III) und (IV) an den Polymerkettenenden nach Ansprüchen 1 und 2.

22. Verwendung der vulkanisierbaren Kautschukzusammensetzungen nach einem der Ansprüche 19 bis 21 zur Herstellung von Reifen, insbesondere Reifenlaufflächen.

23. Verwendung der vulkanisierbaren Kautschukzusammensetzungen nach einem der Ansprüche 19 bis 21 zur Herstellung von Formkörpern, insbesondere Kabelmänteln, Schläuchen, Treibriemen, Förderbändern, Walzenbelägen, Schuhsohlen, Dichtungsringen und Dämpfungselementen.

24. Reifen erhältlich nach Anspruch 22.

25. Formkörper erhältlich nach Anspruch 23.
